# EUROPEAN PATENT SPECIFICATION

(11) **EP 0 411 968 B1**
(45) Date of publication and mention of the grant of the patent: **18.09.1996**
(21) Application number: 90308632.0
(22) Date of filing: 06.08.1990
(51) Int. Cl.: B32B 27/18, B32B 27/32, B32B 31/22

(54) **One side heat sealable polypropylene film**
Einseitig heisssiegelbarer Polypropylenfilm
Pellicule de polypropylène dont un côté est thermosoudable

(30) Priority: 04.08.1989 US 389440
(43) Date of publication of application: 06.02.1991
(73) Proprietor: MOBIL OIL CORPORATION, Fairfax, Virginia 22037-0001 (US)
(72) Inventor: Balloni, Riccardo, Fairport, New York 14450 (US); Keung, Jay Kin, Macedon, New York 14502 (US); Keller, Lajos Edward, L-1952 Luxemburg G.D. (LU)
(74) Representative: Colmer, Stephen Gary

(56) References cited:
- EP-A- 0 021 672
- EP-A- 0 191 976
- EP-A- 0 263 963
- EP-A- 0 275 889
- DE-A- 3 735 272
- GB-A- 1 092 840
- US-A- 4 230 767
- US-A- 4 419 411

## Description

This invention relates to polymer film laminates and, in particular, to a heat-sealable film laminate possessing an oriented, preferably biaxially oriented, polypropylene core layer faced on each side thereof with outer layers which are appropriate to the inside and the outside of a packaging film.

Unlike the prior art composite films which may contain a fatty acid amide, such an erucamide, stearamide or behenamide, to impart lubricity or slip to the films, e.g., the multi-layer films described in U.S. Patent Nos. 4,343,852 and 4,419,411, the film of this invention does not contain such an ingredient. This material has been eliminated because it usually interferes with the receptivity of the film surface for, and the adhesion of, water-based inks and water-based adhesives. Moreover, when concentrated at the film surface, a fatty acid amide can appreciably reduce the optical clarity of the film.

A heat sealable film possessing both good lubricity and both good receptivity for water-based surface coating materials and optical clarity, such as the film of the present invention, is highly advantageous since it permits the converter/end user to utilize inks and/or adhesives which do not incorporate organic solvents. Organic solvents generally present health, explosion and fire hazards and resort must be had to expensive ventilation and safety equipment to provide an acceptable working environment where they are used. Even with the use of such equipment, in some jurisdictions, the atmospheric emission of organic solvents is prohibited and expensive solvent recovery systems are required to comply with legal limitations. The films herein avoid organic solvent-containing coating materials thereby eliminating the health, safety and environmental problems attendant their use as well as the cost of the equipment required to deal with the hazards which they pose.

Films of the present invention must be capable of trouble-free machinability on high speed packaging machines. This simply means that the film has to be able to be transported through the packaging machinery without the film causing any jamming during packaging. One cause of machine jamming has been traced to the outer surface of the film sticking to the heat sealing jaws during the process of packaging. The present film structure avoids this problem.

In accordance with the present invention there is provided a polymer film laminate which comprises:
(a) a first outer layer comprising isotactic polypropylene, provided on one surface of a core layer (b), the polypropylene comprising an anti-blocking agent but being devoid of silicone oil, the exposed surface of the first outer layer being coated with a coefficient of friction-reducing amount of silicone oil transferred to the surface through contact with the exposed surface of a second outer, heat sealable surface layer (c);
(b) a core layer comprising isotactic polypropylene; and
(c) a second, outer heat sealable layer provided on the other surface of the core layer (b), the second outer layer comprising at least one of ethylene-propylene-butene-1 terpolymer; ethylene-propylene-random copolymer; propylene-butene-1 copolymer; ethylene-butene-1 copolymer; or a blend thereof the polymer comprising an anti-blocking agent and silicone oil such that a coefficient of friction-reducing amount thereof will be present on the exposed surface of layer (c) as well as on the exposed surface of layer (a) following contact of these surfaces.

The films of the present invention find their principal utility as a wrapping material. It is to be understood that the present structure can be laminated to other film layers.

The phrase "water-based coating" used herein is to be understood in its broadest sense and includes water-base inks and water-based adhesives.

Two of the three layers of the polymer film laminate herein are derived from a polypropylene of high stereoregularity and in general will be chosen from among the highly isotactic polypropylenes. These two layers can be prepared from the same isotactic polypropylene or from two different varieties thereof. The preferred polypropylenes are well known in the art and are formed by polymerizing polypropylene in the presence of stereospecific catalyst systems. The polypropylenes can have a melt index at 230°C., from 1.0 to 25.0. The crystalline melting point is about 160°C. The number average molecular weight is from 25,000 to 100,000 and specific gravity ranges from 0.90 to 0.91.

The three layers of the polymer film laminate of the present invention will usually be coextruded. Prior to extrusion, the outer layer is mixed; for example by compounding, with an anti-blocking agent; for example, silica, a silicate, a clay, talc and glass which are preferably provided as approximately spheroidal particles. Syloid 244 (W.R. Grace & Co., Davison Chemical Division), a synthetic silica, and Sipernat 44 (Degussa), a synthetic silicate, generally provide good results. The major portion of these particles; that is, anywhere from more than half to as high as 90 wt.% or more, will be of such a size that a significant portion of their surface area; for example, from 10 to 70% thereof, will extend beyond the exposed surface of said outer layer.

The second outer heat-sealable surface layer (c) is derived from an ethylene-propylene-butene-1 terpolymer, an ethylene-propylene random copolymer, a propylene-butene-1 copolymer, an ethylene-butene-1 copolymer, or a blend thereof. Suitable terpolymers are those obtained from the random interpolymerization of 1 to 8 wt.% ethylene, preferably from 3 to 5 wt.% ethylene, with from 65 to 95 wt.% propylene, preferably from 86 to 93 wt.% propylene; butene-1 representing the balance. The foregoing terpolymers are for the most part characterized by a melt index at 230°C from 2 to 16 and advantageously from 3 to 7, a crystalline melting point from 100°C to 120°C, an average molecular weight from 25,000 to 100,000 and a density from 0.89 to 0.92gm/cm³.

The EP random copolymers generally contain from 2 to 7 wt. % ethylene, the balance being made up of propylene. The copolymers can have a melt index at 230°C, generally from 2 to 15 and preferably from 3 to 8. The crystalline melting point is usually from 125°C to 150°C and the number average molecular weight range is from 25,000 to 100,000. The density will usually be from 0.89 to 0.92 gm/cm³.

In general, where blends of terpolymer and random copolymer are used, the blends will contain from 10 to 90 wt.% terpolymer and preferably from 40 to 60 wt.% terpolymer, the balance being made up of random copolymer.

The inside surface layer (c) is compounded with, in addition to the anti-block agent, a silicone oil. The silicone oil advantageously possesses a viscosity from 350 to 600,000 centistokes with 10,000 to 60,000 centistokes being especially preferred. Examples of suitable silicone oils are polydialkylsiloxanes, polyalkylphenylsiloxanes, olefin-modified siloxane oils, polyethylene-modified silicone oils, olefin-polyether-modified silicone oils, epoxy-modified silicone oils, alcohol-modified silicone oils and polydialkylsiloxanes which preferably have from 1 to 4 carbon atoms in the alkyl group, in particular polydimethylsiloxanes. Of the foregoing, the polydialkylsiloxanes, in particular, a polydimethylsiloxane, are preferred for use herein.

The silicone oil is added to layer (c) generally in the form of a dispersion or emulsion, the silicone oil being present within, as well as on the exposed surface of, this layer as discrete microglobules, frequently of an average size from 1 to 2 microns. The silicone oil, which is generally substantially uniformly distributed on the exposed surface of layer (c), is responsible for imparting a reduced coefficient of friction to this surface as well as to the exposed surface of layer (a) when some of the oil is transferred thereto after these surfaces have been placed in mutual contact; for example, as will occur when the laminate film has been wound on a winding coil to form a stock roll.

Polydimethylsiloxane or other silicone oil can be present from 0.15 to 4.0 wt. % of lower layer (c). Some of the silicone oil will be present on the exposed surface layer (c). The amount selected should in any event be sufficient to provide a coefficient of friction of layers (a) and (c), following transfer of silicone oil microglobules to the latter, of 0.4 or less, preferably from 0.20, such as 0.25, to 0.3 up to at least 60°C. Because of the manner in which the silicone oil is applied to just the exposed surface of outer layer (a) such layer exhibits an improved coefficient of friction but not at the expense of its receptivity to water-based coatings or optical clarity.

The silicone oil should be incorporated as homogeneously as possible in the polymer constituting layer (c). This can be achieved by either incorporating the silicone oil as a dispersion or emulsion at room temperature and then heating the blend with the application of shearing forces or by incorporating the oil while the blend is being melted. The mixing temperature must be high enough to soften the blend and enable a very uniform mixture to be formed. The temperature required in a kneader or extruder is generally from 170°C to 270°C.

Core layer (b) preferably contains an antistatic agent, for example an etholated tertiary amine,such as cocoamine, N,N-bis(2-hydroxyethyl) stearylamine and glycerol monostearate. Core layer (b) will usually represent from 70% to 90% of the thickness of the overall film laminate or an even higher percentage thereof. First outer layer (a) and second outer layer (c) are coextensively applied to each major surface or core layer (b) usually by being coextrude directly thereon. For example the individual polymer streams constituting the material of layers (a),(b) and (c) can be coextruded from a conventional extruder through a flat sheet die, the melt streams being combined in an adapter prior to being extruded from the die. Each of the outer layers (a) and (c) can comprise, for example, approximately 6.0% of the total thickness of the film laminate. After leaving the die orifice, the film laminate is chilled and the quenched sheet then heated and stretched for example; five times in the machine direction and then subsequently, for example, eight times in the tranverse direction. The edges of the film can be trimmed. The film laminate is next wound onto a reel in over to effect transfer of silicone oil from the exposed surface of layer (c) to the exposed surface of layer (a). The overall thickness of the film laminate is not critical and, advantageously, can range from 8.9 to 51 µm (0.35 to 2.0 mils).

In the following Examples, Example 1 illustrates a comparative film laminate wherein both outer layers (a) and (c) are both of the stated terpolymer resin. Example 2 is the same as Example 1 except that outer layers (a) and (c) are both of a homopolymer polypropylene identical to that of core layer (b). Example 3 illustrates a film laminate in accordance with the invention. Examples 4 and 5 are the same structure as Example 3 but with an antistatic agent in the core layer.

### EXAMPLE 1 (Comparative Example)

A core layer (b) of about 20 microns thickness derived from a propylene homopolymer of high stereoregularity (Fina 3378XB) containing 1500 ppm of erucamide, is coextruded with an outer surface layer (a) of about 0.61 microns thickness derived from an ethylene-propylene-butene-1 terpolymer (CHISSO XF7700) and an inside surface layer (c) of the same terpolymer and of a thickness of about 1.2 microns. The surface layer (a) and (c) each contain 0.23 wt. % Sylobloc 44. This is an antiblock of synthetic amorphous silica of approximately spherical particles averaging 3 microns in diameter. Layer (c) was formulated so as to include 1.2 wt.% polydimethylsiloxane of viscosity 30,000 cSt.(mm²/s). The extrudate is quenched; reheated; and stretched from 4 to 6 times in the machine direction at approximately 127°C (260°F). Subsequently, the sheet is stretched from 8 to 10 times in the transverse direction at approximately 166°C (330°F) in a tenter frame. Layer (a) is corona discharge treated in a conventional manner to 38 dynes/cm and wound in a mill roll form. The coefficient of friction of layers (a) and (c) is 0.25 and 0.40, respectively.

To simulate end use machine performance, the film of the sample was run on a Campbell wrapper horizontal form fill and seal machine. At a temperature between 121°C and 132°C (250° and 270°F), the sample performed well with no sticking. At a temperature between 138°C and 149°C (280° and 300°F) the film caused machine jamming due to excessive sticking at the sealing jaw region of the machine.

### EXAMPLE 2 (Comparative Example)

Example 1 was repeated except that outer layer (a) was replaced by a homopolymer polypropylene identical to the core layer but containing 0.23 wt.% Sylobloc 44 antiblock agent.

The Campbell wrapper machine test was repeated. The apparatus handled the film well over the entire temperature range i.e. this film had good machinability. Sealing jaw stick and consequent machine jamming was not observed. However, the seal range was reduced by 11°C (20°F) due to the deleterious effect the corona discharge treatment had on the (c) layer. Coefficient of friction and hot slip characteristics were substantially higher than in Example 1.

### EXAMPLE 3

Example 2 was repeated with the same structure as in Example 2 except that flame treatment was employed instead of corona treatment. The flame treatment produced the same surface effect and to the same extent as corona treatment. Off-line testing showed improved coefficient of friction values on the untreated outer layer (c) due to complete elimination of the effect of corona discharge treatment on the surface side of layer (c). Corona discharge treatment has the detrimental effect of increasing the COF of the surface of the untreated side.

The Campbell wrapper machine test was repeated. The film of Example 3 showed excellent machinability and its seal range was 11°C (20°F) than that of Example 2 because of the absence of corona back side treatment effect. The COF and hot slip values were excellent. The homopolymer polypropylene (a) layer improved machinability by eliminating the sealing jaw sticking problem. Flame treating the surface of the (a) layer did away with the deleterious effects resulting from an uncontrolled corona discharge treatment regarding the surface of the (c) layer.

Optionally, layer's (a) and/or (c) can contain a minor amount of wax, e.g., a microcrystalline wax for added lubricity. Amounts of wax from 2 to 15 wt.% of either or both layers (a) and (c) can used if desired. Either or both of these layers can also contain pigments, filler's, stabilizers, light protective agents or other suitable modifying ingredients if desired.

### EXAMPLE 4

Example 3 was repeated with the same structure and flame treatment. However, 1000 ppm Armostat 410, tertiary amine anti-static agent was incorporated into layer (b). Machinability was excellent and dust pick-up due to static cling was reduced.

### EXAMPLE 5

Example 4 was repeated with the same structure and flame treatment. However, instead of the tertiary amine, a blend of 2000 ppm N,N-bis (2-hydroxyethyl) stearylamine and 1000 ppm glycerol monostearate was used. Machinability was excellent and static cling was eliminated.

The names "ARMOSTAT"; "CHISSO"; "FINA"; "SIPERNAT"; "SYLOBLOC" and "SYLOID" are all trade marks.

## Claims

1. A polymer film laminate which comprises:
(a) a first outer layer comprising isotactic polypropylene, provided on one surface of a core layer (b), the polypropylene comprising an anti-blocking agent but being devoid of silicone oil, the exposed surface of the first outer layer being coated with a coefficient of friction-reducing amount of silicone oil transferred to the surface through contact with the exposed surface of a second outer, heat sealable surface layer (c);
(b) a core layer comprising isotactic polypropylene; and
(c) a second, outer heat sealable layer provided on the other surface of the core layer (b), the second outer layer comprising at least one of ethylene-propylene-butene-1 terpolymer; ethylene-propylene-random copolymer; propylene-butene-1 copolymer; ethylene-butene-1 copolymer; or a blend thereof the polymer comprising an anti-blocking agent and silicone oil such that a coefficient of friction-reducing amount thereof will be present on the exposed surface of layer (c) as well as on the exposed surface of layer(a) following contact of these surfaces.

2. A laminate according to claim 1 which comprises a wax in layer (a) and/or (c).

3. A laminate according to claim 1 or 2, which comprises a microcrystalline wax in layer (a) and/or (c).

4. A laminate according to any preceding claim wherein the exposed surface of layer (a) is subjected to flame treatment.

5. A laminate according to any preceding claim wherein the silicone oil comprises a polydialkylsiloxane.

6. A laminate according to any preceding claim wherein the silicone oil comprises a polydimethylsiloxane.

7. A laminate according to any preceding claim wherein the silicone oil is incorporated into layer (c) in an amount from 0.15 to 4.0 wt% of layer (c).

8. A laminate according to any preceding claim wherein a major proportion of the anti-blocking agent comprises particles of approximately spherical shape.

9. A laminate according to any preceding claim wherein the anti-blocking agent comprises silica or a silicate.

10. A laminate according to any preceding claim wherein the isotactic polypropylene constituting each of layers (a) and (b)possess a melt index at 230°C from 1.0 to 25.0; a crystalline melting point of about 160°C; a number average molecular weight range from 25,000 to 100,000; and a specific gravity from 0.90 to 0.91.

11. A laminate according to any preceding claim wherein layer (b) constitutes at least 70% of the total thickness of the laminate.

12. A laminate according to any preceding claim wherein layer (b) contains an antistatic agent.

13. A laminate according to claim 11 wherein the antistatic agent comprises at least one of a tertiary amine, N,N-bis (2-hydroxyethyl) stearylamine, glycerol monostearate, or a blend thereof.

14. A laminate according to any preceding claim wherein, prior to flame treatment of its exposed surface, layer (a) is devoid of fatty acid amide, as slip agent.

15. Use of flame treatment to provide receptivity for water-based coatings for polymer film laminates comprising a polypropylene surface which, at the time of treatment, is devoid of silicone.

16. Use according to claim 15 wherein the surface is also, at the time of treatment, devoid of fatty acid amide.

## Patentansprüche

1. Polymerfolienlaminat, das folgende Bestandteile umfaßt:
(a) eine erste äußere Schicht, die isotaktisches Polypropylen umfaßt und auf einer Oberfläche einer Kernschicht (b) bereitgestellt wird, wobei das Polypropylen ein Antiblockiermittel umfaßt, jedoch frei von Siliconöl ist, die freiliegende Oberfläche der ersten äußeren Schicht mit einer den Reibungskoeffizienten verringernden Menge eines Siliconöls beschichtet ist, das auf die Oberfläche durch den Kontakt mit der freiliegenden Oberfläche einer zweiten äußeren Schicht, der heißsiegelbaren Oberflächenschicht (c), übertragen worden ist;
(b) eine Kernschicht, die isotaktisches Polypropylen umfaßt; und
(c) eine zweite äußere heißsiegelbare Schicht, die auf der anderen Oberfläche der Kernschicht (b) bereitgestellt wird, wobei die zweite äußere Schicht mindestens einen unter Ethylen-Propylen-Buten-1-Terpolymeren; statistischen Ethylen-Propylen-Copolymeren; Propylen-1-Buten-Copolymeren; Ethylen-1-Buten-Copolymeren oder Gemischen davon ausgewählten Bestandteil umfaßt, wobei das Polymere ein Antiblockiermittel und ein Siliconöl umfaßt, so daß eine den Reibungskoeffizienten verringernde Menge davon auf der freiliegenden Oberfläche der Schicht (c) sowie auf der freiliegenden Oberfläche der Schicht (a) nach dem Kontakt dieser Oberflächen vorhanden ist.

2. Laminat nach Anspruch 1, das ein Wachs in der Schicht (a) und/oder (c) umfaßt.

3. Laminat nach Anspruch 1 oder 2, das ein mikrokristallines Wachs in der Schicht (a) und/oder (c) umfaßt.

4. Laminat nach einem der vorstehenden Ansprüche, wobei die freiliegende Oberfläche der Schicht (a) einer Flammenbehandlung unterzogen wird.

5. Laminat nach einem der vorstehenden Ansprüche, wobei das Siliconöl ein Polydialkylsiloxan umfaßt.

6. Laminat nach einem der vorstehenden Ansprüche, wobei das Siliconöl ein Polydimethylsiloxan umfaßt.

7. Laminat nach einem der vorstehenden Ansprüche, wobei das Siliconöl der Schicht (c) in einer Menge von 0,15 bis 4,0 Gew.-% der Schicht (c) einverleibt ist.

8. Laminat nach einem der vorstehenden Ansprüche, wobei ein Hauptteil des Antiblockiermittels Teilchen mit ungefähr kugelförmiger Gestalt aufweist.

9. Laminat nach einem der vorstehenden Ansprüche, wobei das Antiblockiermittel Siliciumdioxid oder ein Silicat umfaßt.

10. Laminat nach einem der vorstehenden Ansprüche, wobei das isotaktische Polypropylen, das jede der Schichten (a) und (b) bildet, einen Schmelzindex bei 230°C von 1,0 bis 25,0; einen kristallinen Schmelzpunkt von etwa 160°C; ein Zahlenmittel des Molekulargewichts im Bereich von 25 000 bis 100 000; und ein spezifisches Gewicht von 0,90 bis 0,91 aufweist.

11. Laminat nach einem der vorstehenden Ansprüche, wobei die Schicht (b) mindestens 70% der Gesamtdicke des Laminats ausmacht.

12. Laminat nach einem der vorstehenden Ansprüche, wobei die Schicht (b) ein antistatisches Mittel enthält.

13. Laminat nach Anspruch 12, wobei das antistatische Mittel mindestens einen der Bestandteile tertiäres Amin, N,N-Bis-(2-hydroxyethyl)-stearylamin, Glycerinmonostearat oder ein Gemisch davon umfaßt.

14. Laminat nach einem der vorstehenden Ansprüche, wobei vor der Flammenbehandlung ihrer freiliegenden Oberfläche die Schicht (a) frei von Fettsäureamid als Gleitmittel ist.

15. Verwendung einer Flammenbehandlung, um für eine Aufnahmefähigkeit für auf Wasser basierende Überzüge von Polymerfolienlaminaten zu sorgen, die eine Polypropylenoberfläche umfassen, die zum Zeitpunkt der Behandlung frei von Silicon ist.

16. Verwendung nach Anspruch 15, wobei die Oberfläche zum Zeitpunkt der Behandlung auch frei von einem Fettsäureamid ist.

## Revendications

1. Un stratifié de film de polymère qui comprend :
(a) une première couche externe comprenant un polypropylène isotactique, disposé sur l'une des faces d'une couche interne (b), le polypropylène comprenant un agent anti-blocage exempte d'huile de silicone, la face exposée de la première couche externe étant enduite d'une quantité réductrice du coefficient de friction d'une huile de silicone transférée sur la surface par contact avec la surface exposée d'une seconde couche superficielle thermosoudable externe (c);
(b) une couche interne comprenant du polypropylène isotactique; et
(c) une seconde couche thermosoudable externe, disposée sur l'autre surface de la couche interne (b), la seconde couche externe comprenant au moins un des terpolymères éthylène-propylène-butène-1, copolymère statistique éthylène-propylène, copolymère propylène-butène-1, copolymère éthylène-butène-1 ou leurs mélanges, le polymère comprenant un agent anti-blocage et une huile de silicone permettant de réduire le coefficient de friction de la surface externe de la couche (c) ainsi que de la surface externe de la couche (a), après contact de ces surfaces.

2. Un stratifié selon la revendication 1, qui comprend une cire dans les couches (a) et/ou (c).

3. Un stratifié selon la revendication 1 ou 2, qui comprend une cire microcristalline dans les couches (a) et/ou (c).

4. Un stratifié selon l'une quelconque des revendications précédentes, dans lequel la surface exposée de la couche (a) est soumise à un traitement à la flamme.

5. Un stratifié selon l'une quelconque des revendications précédentes, dans lequel l'huile de silicone comprend un polydialkylsiloxane.

6. Un stratifié selon l'une quelconque des revendications précédentes, dans lequel l'huile de silicone comprend un polydiméthylsiloxane.

7. Un stratifié selon l'une quelconque des revendications précédentes, dans lequel l'huile de silicone est incorporée dans la couche (c) en une quantité comprise entre 0,15 et 4,0 % en poids de la couche (c).

8. Un stratifié selon l'une quelconque des revendications précédentes, dans lequel la majeure partie de l'agent antiblocage est constituée de particules de forme à peu près sphérique.

9. Un stratifié selon l'une quelconque des revendications précédentes, dans lequel l'agent antiblocage comprend de la silice ou un silicate.

10. Un stratifié selon l'une quelconque des revendications précédentes, dans lequel le polypropylène isotactique constituant chacune des couches (a) et (b) présente un indice de fusion à 230°C de 1,0 à 25,0, un point de fusion cristallin d'environ 160°C, un poids moléculaire moyen en nombre compris entre 25 000 et 100 000 et une masse spécifique comprise entre 0,90 et 0,91 g/cm³.

11. Un stratifié selon l'une quelconque des revendications précédentes, dans lequel la couche (b) constitue au moins 70% de l'épaisseur totale du stratifié.

12. Un stratifié selon l'une quelconque des revendications précédentes, dans lequel la couche (b) contient un agent antistatique.

13. Un stratifié selon la revendication 11, dans lequel l'agent antistatique comprend au moins un des composés suivants : amine tertiaire, N,N-bis-(2-hydroxyéthyl)stéarylamine, monostéarate de glycérol ou leurs mélanges.

14. Un stratifié selon l'une quelconque des revendications précédentes, dans lequel, avant le traitement à la flamme de sa surface exposée, la couche (a) est débarrassée de l'amide d'acide gras utilisé en tant qu'agent de glissement.

15. Utilisation d'un traitement à la flamme à conférer une réceptivité à l'égard des revêtements à base d'eau, de stratifiés de films de polymères comprenant une surface de polypropylène qui, au moment du traitement, est exempte de silicone.

16. Utilisation selon la revendication 15, dans laquelle la surface au moment du traitement est également exempte d'amide d'acide gras.
